# EUROPÄISCHE PATENTSCHRIFT

(11) **EP 0 556 562 B1**
(45) Veröffentlichungstag und Bekanntmachung des Hinweises auf die Patenterteilung: **16.04.1997**
(21) Anmeldenummer: 93100538.3
(22) Anmeldetag: 15.01.1993
(51) Int. Cl.: B21D 43/05, B23Q 41/04

(54) **Transferpressenlinie**
Transfer press line
Ligne de presses de transfert

(30) Priorität: 21.01.1992 DE 4201387
(43) Veröffentlichungstag der Anmeldung: 25.08.1993
(60) Teilanmeldung: 96106597.6
(73) Patentinhaber: Umformtechnik ERFURT GmbH, D-99086 Erfurt (DE)
(72) Erfinder: Darr, Uwe, O-5034 Erfurt (DE); Hartung, Wolfgang, O-5082 Erfurt (DE); Zeidler, Rolf, O-5082 Erfurt (DE)

(56) Entgegenhaltungen:
- DE-A- 3 827 985
- FR-A- 2 162 862

## Beschreibung

Die Erfindung betrifft eine Transferpressenlinie zur Bearbeitung von großflächigen Blechteilen in mehreren Arbeitsstufen gemäß dem Oberbegriff des Patentanspruches 1.

Eine bekannte Pressenanlage dieser Art (DE-OS 39 05 069) besteht aus mehreren in geringem Abstand zueinander aufgestellten Pressen, deren Pressentische und Kopfstücke durch separate Pressenständer oder durch jeweils zwei benachbarten Fressen zugeordnete gemeinsame Pressenständer miteinander verbunden sind und die mittels Verbindungswellen von einem zentralen Antrieb synchron angetrieben werden.
Jede Presse enthält nur eine Arbeitsstufe.
Im Ständerbereich zwischen zwei Arbeitsstufen ist jeweils eine Leerstufe vorgesehen, in der eine Lageorientierung der Blechteile in mehreren Freiheitsgraden möglich ist.
Der Transport der Blechteile in bzw. aus der Presse sowie von einer Arbeitsstufe zur nächsten erfolgt mittels Saugertraversen, die an Laufwagen befestigt sind, welche ihrerseits in durch die gesamte Pressenanlage reichenden Tragschienen verschiebbar gelagert und über ein Kurvengetriebe vom Pressenantrieb angetrieben werden. Beim Werkzeugwechsel werden die Saugertraversen - von den Laufwagen gelöst - in Aufnahmen der Schiebetische abgelegt und gemeinsam mit den Werkzeugen aus der Presse ausgefahren.

Nachteilig wirkt sich bei dieser Lösung der erhebliche Aufwand für die Anordnung der Zwischenablagen zwischen den Werkzeugstufen und der damit verbundene erhöhte Raumbedarf für die Pressenanlage aus.
Bei einer anderen bekannten Lösung (DE-OS 38 27 985) wurde dieser Nachteil dadurch vermieden, daß nicht gekoppelte Tisch- und Kopfstückteile über einen gemeinsamen Ständer mit nur einem Zuganker für zwei benachbarte Arbeitsstationen verspannt sind und damit eine schmale Ausführung der Ständer zwecks Wegfall der Leerstufen bei geringfügig vergrößertem Transportschritt möglich ist.

Nachteilig wirkt sich hier der trotz separater Tisch- und Kopfstückteile nicht eigenständige Pressencharakter aus, der infolge gemeinsamer Ständer eine verformungsseitige Beeinflussung der Stufen insbesondere in horizontaler Richtung bei außermittiger Belastung noch zuläßt. Mittel zur Lageorientierung der Blechteile in mehreren Freiheitsgraden entsprechend den Erfordernissen der einzelnen Werkzeugstufen - wie beispielsweise in den Leerstufen der erstgenannten Lösung - sind nicht vorgesehen.
Der Erfindung liegt das Problem zugrunde, eine Transferpressenlinie nach dem Oberbegriff des Patentanspruchs 1 so zu gestalten, daß bei einer in Teiletransportrichtung sehr kurzen Ausführung der Pressenlinie ohne Leerstufen die Eigenschaften integrierter Einzelpressen mit separaten Pressengestellen betreffs Nichtbeeinflussung der Werkzeugstufen untereinander erhalten bleiben, ohne daß die Transportschritte wesentlich vergrößert werden.

Erfindungsgemäß wird das durch die in den unabhängigen Patentansprüchen 1 und 2 beschriebenen Merkmale erreicht.
Der Patentanspruch 2 betrifft eine alternative Ausführung, bei der die Schiebetische der einzelnen Pressen beiderseits ausfahrbar sind.
Durch die Merkmale des Anspruchs 3 wird die gegenseitige Beeinflussung der Pressengestelle im Tischbereich unter Belastung weitgehend vermieden. Nach Anspruch 4 ist eine kurzfristige Umsetzung der Werkzeugstufen in Folgestationen im Havariefall bei Ausfall einer Presse möglich.
Die Ansprüche 5 und 6 betreffen die weitere Ausgestaltung des Transfersystems.

Die Erfindung wird nachstehend an Ausführungsbeispielen näher erläutert. Die zugehörigen Zeichnungen zeigen:
- Fig. 1:: eine Transferpressenlinie mit quer zur Teiletransportrichtung asymmetrisch angeordneten Pressen in der Vorderansicht,
- Fig. 2:: den Schnitt A-A von Fig. 1,
- Fig. 3:: den Schnitt B-B von Fig. 1,
- Fig. 4:: den Ausschnitt "x" aus Fig. 2,
- Fig. 5:: eine weitere Ausführung einer Transferpressenlinie mit quer zur Teiletransportrichtung hintereinander angeordneten Pressenständern in der Vorderansicht,
- Fig. 6:: den Schnitt C-C von Fig. 5 bei einer Ausführung mit quer zur Teiletransportrichtung symmetrisch angeordneten Pressen unterschiedlicher Ständerweite,
- Fig. 7:: den Schnitt C-C von Fig. 5 bei einer Ausführung mit quer zur Teiletransportrichtung asymmetrisch angeordneten Pressen gleicher Ständerweite und
- Fig. 8:: die ausschnittsweise Darstellung einer auf dem Oberwerkzeug abgelegten Saugertraverse.

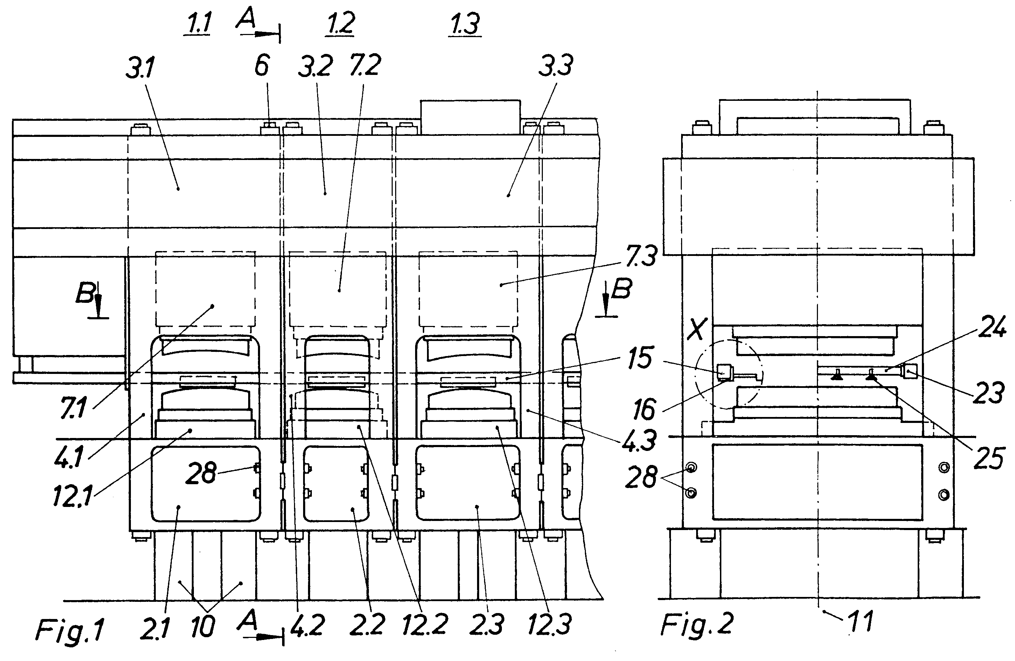

Die Transferpressenlinie (Fig. 1) besteht aus mehreren in Teiletransportrichtung hintereinander aufgestellten einzelnen Pressen, von denen nur die ersten drei Pressen 1.1-1.3 in der Zeichnung dargestellt wurden. Die Pressen 1.1-1.3 bestehen gestellseitig aus den Pressentischen 2.1-2.3, den Kopfstücken 3.1-3.3, den rechten Pressenständern 4.1-4.3 und den linken Pressenständern 5.1-5.3, die durch vorgespannte Zuganker 6 miteinander verbunden sind.

Die Stößel 7.1-7.3 sind in den Stößelführungen 8 der Pressenständer 4.1-4.3, 5.1-5.3 vertikal verschiebbar gelagert und mittels je vier Pleuelstangen mit dem Getriebe verbunden.
Die Getriebe aller Pressen 1.1-1.3 der Linie stehen über Verbindungswellen mit einem gemeinsamen Pressenantrieb in Wirkverbindung. Durch die je Presse im separaten Zugankerverbund gekoppelten Tisch-, Kopfstück- und Pressenständerteile bleibt der eigenständige Pressencharakter erhalten und eine gegenseitige Beeinflussung der elastischen Verformungen der Pressenstufen untereinander wird vermieden.
Die Pressentische 2.1 und 2.2 bzw. 2.2 und 2.3 sind ggf. lediglich in ihrem äußeren Bereich mittels Spannbolzen 28 in der Nähe der neutralen Faser zur gegenseitigen Lagesicherung miteinander verbunden. In diesem Bereich geht die elastische Verformung der Pressentische 2.1-2.3 gegen Null. Die Pressentische 2.1 und 2.2 bzw. 2.2 und 2.3 sind jeweils auf gemeinsamen Säulen 10 auf dem Fundament 11 gelagert.

Die Pressengestelle der einzelnen Pressen 1.1-1.3 sind asymmetrisch mit unterschiedlicher Ständerweite (l₁, l₂) in Durchlaufrichtung ausgeführt, wobei je Seite eine große (l₁) und eine kleine Ständerweite (l₂) von Stufe zu Stufe wechseln. Zwischen den Werkzeugstufen der Pressen 1.1 und 1.2 bzw. 1.2 und 1.3 sind in Pressentischebene Schrottschächte 9 zur Abführung des Abfalls angeordnet.
In der Ebene dieser Schrottschächte 9 befinden sich - quer zur Teiletransportrichtung gesehen - die rechte hintere Säule des Pressenständers 4.1 und die linke vordere Säule des Pressenständers 5.2 bzw. die linke hintere Säule des Pressenständers 5.2 und die rechte vordere Säule des Pressenständers 4.3 auf gleicher Höhe. Mit dieser Anordnung wird der durch die Pressenständer 4.1-4.3, 5.1-5.3 bedingte Freiraum zwischen den Pressen 1.1-1.3 minimiert und der erforderliche Transportschritt von Pressenstufe zu Pressenstufe gegenüber eng hintereinander angeordneten Pressen mit symmetrischen Pressengestellen reduziert.

Die unterschiedlich große und wechselnde Ständerweite erfordert, daß die der Presse 1.1, 1.3 und jeder übernächsten zugeordneten Schiebetische 12.1, 12.3 nach der in Teiletransportrichtung rechten Seite und die der Presse 1.2 und jeder übernächsten zugeordneten Schiebetische 12.2 nach der linken Seite zwecks Werkzeugwechsel in die Positionen 13.1-13.3 ausfahren.
In den Positionen 13.1-13.3 werden die Schiebetische 12.1-12.3 in eine zur vorangegangenen rechtwinklig verlaufende Fahrtrichtung umgespurt. Zwischen den ausgefahrenen Schiebetischen 12.1-12.3 befinden sich auf gleicher Ebene die mit neuen Werkzeugsätzen vorgerüsteten Schiebetische 14.1-14.3. Durch Verfahren der Schiebetische 12.1-12.3, 14.1-14.3 längs zur Teiletransportrichtung gelangen die ausgefahrenen Schiebetische 12.1-12.3 in die Umrüstpositionen und die Schiebetische 14.1-14.3 in die Positionen 13.1-13.3 zum Einfahren der neuen Werkzeugsätze in die Pressen 1.1-1.3.

Der bei dieser Transferpressenlinie typische eigenständige Charakter jeder einzelnen Presse 1.1-1.3 ermöglicht beispielsweise im Havariefall eines Getriebes einer Presse 1.1-1.3 ein Weiterarbeiten der Linie im Notbetrieb. Bei Ausfall einer Pressenstufe ist es erforderlich, daß die Werkzeuge ab dieser ausgefallenen Stufe jeweils auf die nächstfolgende Pressenstufe verlagert werden. Dazu fahren die Schiebetische 12.1-12.3 der Pressen 1.1-1.3 und jeder weiteren in Teiletransportrichtung über den vorher abgesenkten Schrottschacht 9 zur nächsten Stufe. Die havarierte Pressenstufe wird mittels einer auf dem zweiten zur Pressenstufe gehörenden Schiebetisch 14.1, 14.2 oder 14.3 einfahrbaren, nicht dargestellten Ablagestation überbrückt. Enthält die Transferpressenlinie keine am Ende integrierte Reservepresse, wird der letzte Arbeitsgang auf einer separaten Presse durchgeführt.

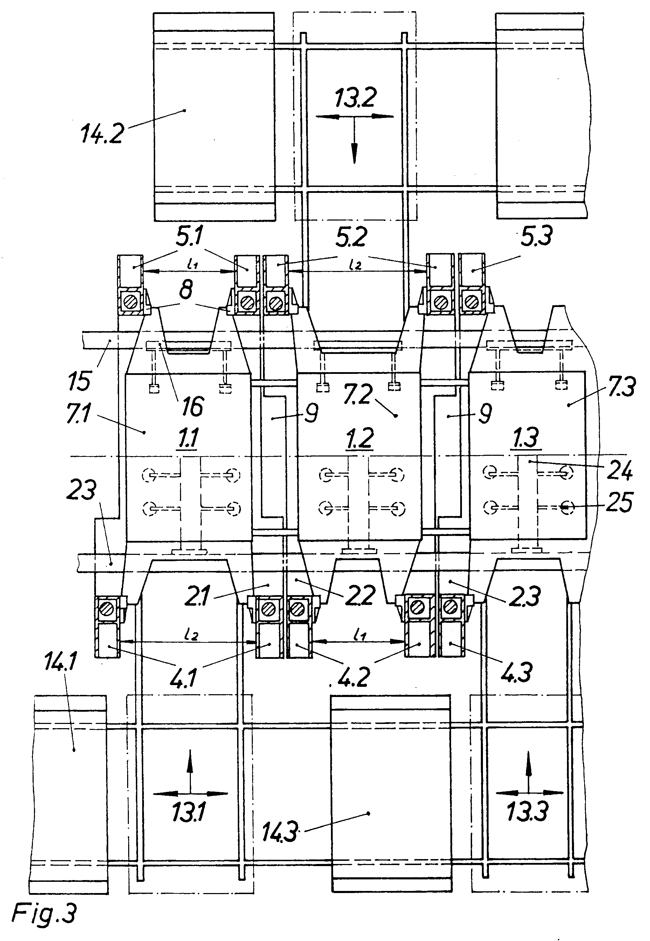

Zum Transport der Blechteile in bzw. aus der Transferpressenlinie sowie von einer Pressenstufe zur nächsten sind am Beispiel Fig. 2 und 3 zwei durch alle Pressen 1.1-1.3 der Linie durchgehende Tragschienen 15, 23 vorgesehen, auf denen entweder mit teilespezifischen Greiferelementen bestückte Greiferleisten 16 (Fig. 3, obere Hälfte) oder die beiden Tragschienen 23 miteinander verbindende Saugertraversen 24 (Fig. 3, untere Hälfte) angeordnet sind. Die Bewegung der Tragschienen 15, 23 wird über ein in der Zeichnung nicht dargestelltes Kurvengetriebe bzw. Kurvenkoppelgetriebe vom Pressenantrieb eingeleitet.

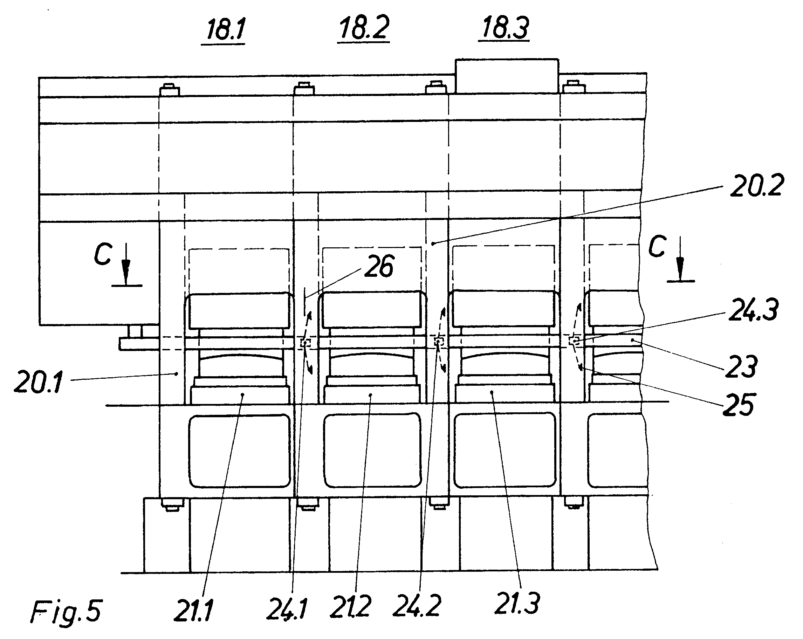

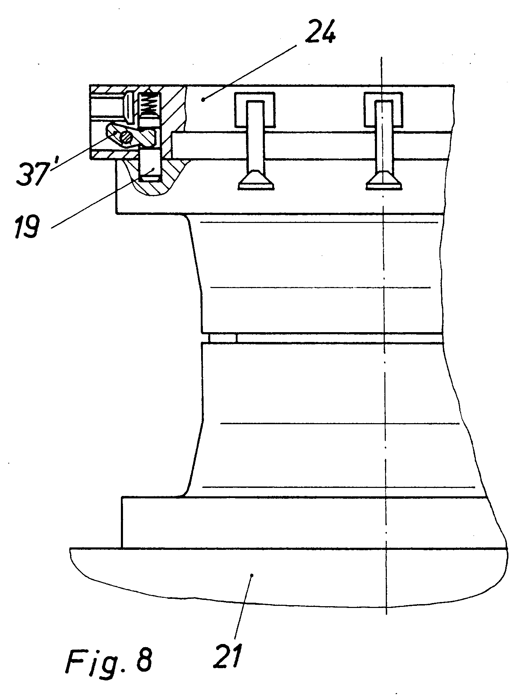

Die Saugertraversen 24 sind mit teilespezifischen Saugern oder Saugergruppen 25 versehen und führen während des Blechteiltransportes eine zweidimensionale Bewegung aus.
Die Rücklaufbewegung wird durch eine Raststellung 26 (Fig. 5) zwischen den Werkzeugstufen während des Schließvorganges der Stößel 7.1-7.3 unterbrochen. Die Saugertraversen 24 werden bei der Bewegung in diese Raststellung 26 bedarfsweise um ihre Längsachse geschwenkt, wenn der Freiraum zwischen den Werkzeugen der benachbarten Pressen 18.1-18.3 kleiner ist als die maximale Ausdehnung der Saugertraversen 24 in der Arbeitsposition.
Die Schwenkbewegung ist sowohl mit Hilfe des nachfolgend beschriebenen, jeder Saugertraverse zugeordneten separatem Schwenkmoduls der zur Lageorientierung dienenden Zusatzeinrichtung 17, als auch mittels eines gemeinsamen Kurvenantriebes für alle Saugertraversen realisierbar. Bei der Kombination beider Schwenkbewegungen werden die Bewegungen antriebsseitig überlagert.
Beim Werkzeugwechsel werden die Saugertraversen 24 von den Tragschienen 23 abgekoppelt und auf der Oberseite der von den Stößein 7.1-7.3 abgekoppelten Oberwerkzeuge abgelegt.
Dazu enthalten die Saugertraversen 24 (Fig. 8) federvorgespannte Absteckbolzen 19, die in Öffnungen der Oberwerkzeuge bzw. Oberwerkzeugspannplatten arretiert werden.
Im Absteckbolzen 19 ist das äußere Ende eines in der Saugertraverse 24 drehbar gelagerten Spannhebels 37' geführt.

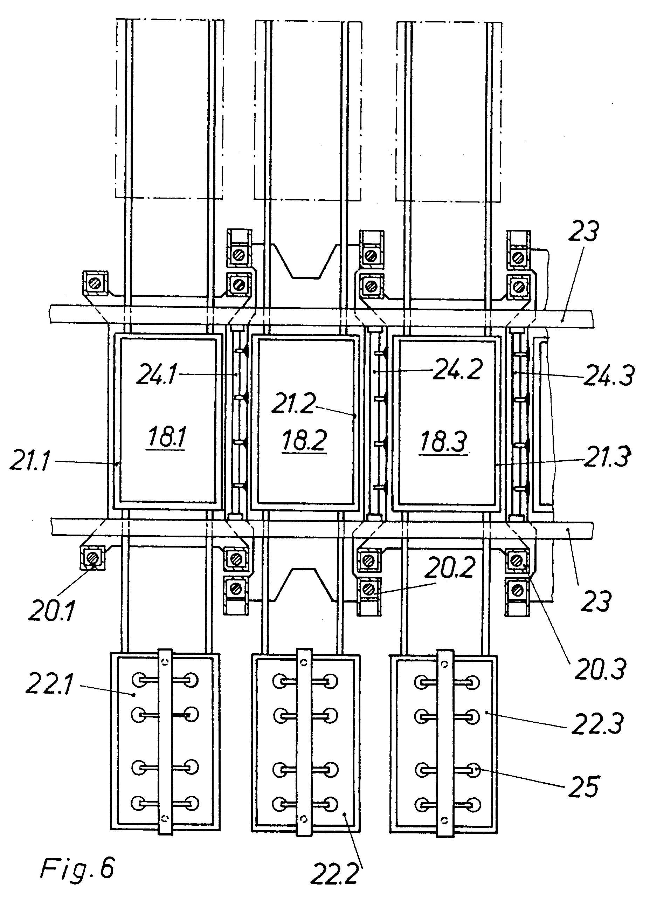

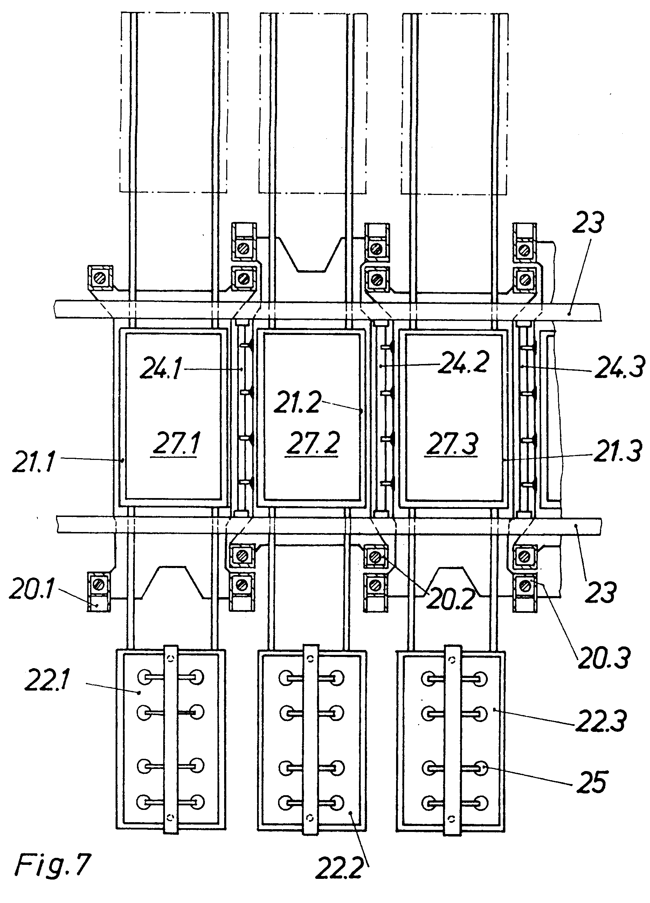

Durch Aufheben der Federkraft wird die Spannhebelarretierung der Kolbenstange 34 aufgehoben und durch Zurückziehen der Kolbenstange 34 die Verbindung von Saugertraverse 24 und Tragschiene 23 gelöst. Die abgekoppelten Saugertraversen 24 werden am Beispiel von Fig. 6 und 7 nach dem Anheben der Tragschienen 23 gemeinsam mit dem Werkzeugsatz auf dem Schiebetisch 21 nach der linken Seite aus dem Pressenraum ausgefahren und die bereits auf der rechten Pressenseite mit einem neuen Werkzeugsatz vorgerüsteten Schiebetische 22 fahren gemeinsam mit der zugehörigen Saugertraverse 24 in umgekehrter Reihenfolge wieder in den Pressenraum ein.

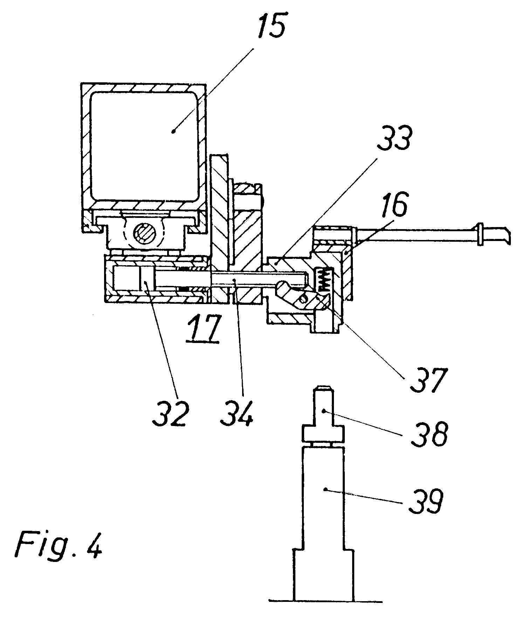

Zur Lageorientierung der Blechteile vor Eintrag in die Folgepresse ist bei Bedarf in den Koppelstellen der Greiferleisten 16 bzw.der Saugertraversen 24 an den Tragschienen 15, 23 jeweils eine Zusatzeinrichtung 17 vorgesehen (Fig. 4), durch die die Greiferleisten 16 bzw. Saugertraversen 24 jeder Pressenstufe mittels separater Stellantriebe unabhängig voneinander in mehreren Freiheitsgraden bewegbar mit den Tragschienen 15, 23 verbunden sind. Die Zusatzeinrichtung ist modular aufgebaut und läßt sich entsprechend den technologischen Erfordernisssen für unterschiedliche Freiheitsgrade der Greiferleiste 16 bzw. Saugertraverse 24 ausrüsten.
Eine in der Zusatzeinrichtung integrierte Zylinder einheit 32 dient gleichzeitig zur Entarretierung der Greiferleistenaufnahme 33 bzw. einer Saugertraverse beim Umrüstvorgang, indem deren Kolben in die linke Rastposition fährt.

Die Greiferleistenaufnahme 33 enthält neben der keilprofilierten Bohrung zur Aufnahme der Kolbenstange 34 einen Spannhebel 37, der mittels einer Feder die Kolbenstange 34 arretiert. Beim Werkzeugwechsel wird diese Spannhebelarretierung durch einen Mitnehmer 38, der mittels einer auf dem Schiebetisch 12.1-12.3 bzw. dem Werkzeug angeordneten Hubeinrichtung 39 mit der Greiferleistenaufnahme 33 wirkverbunden ist, unterbrochen.

Weitere vorteilhafte Ausgestaltungsformen einer Transferpressenlinie sind in den Fig. 5-7 dargestellt. Es werden nur die abweichenden charakteristischen Merkmale gegenüber dem vorstehenden Ausführungsbeispiel beschrieben.

Nach Fig. 6 sind die Pressenständer 20.1 und 20.2 der benachbarten Fressen 18.1 und 18.2 bzw. die Pressenständer 20.2 und 20.3 der Pressen 18.2 und 18.3 so ineinander verschachtelt, daß sie quer zur Teiletransportrichtung hintereinander in einer Flucht stehen. Die Pressen sind symmetrisch ausgeführt. Innerhalb der Transferpressenlinie wechseln jeweils eine Presse 18.1, 18.3 mit quer zur Teiletransportrichtung kleinerer Ständerweite mit einer Presse 18.2 mit größerer Ständerweite.

Eine weitere Ausführung (Fig. 7) besteht aus Pressen 27.1-27.3 mit gleicher Ständerweite, die quer zur Teiletransportrichtung wechselseitig um die Ständerbreite seitlich versetzt zueinander angeordnet sind.

Im Unterschied zum 1. Ausführungsbeispiel sind bei den beiden letztgenannten Ausführungen (Fig. 5-7) die Ständerweiten längs zur Teiletransportrichtung aller modular in der Pressenlinie integrierten Pressen 18.1-18.3, 27.1-27.3 gleich groß, so daß die Aus- bzw. Einfahrrichtung aller Schiebetische 21, 22 beim Werkzeugwechsel einheitlich jeweils nach links bzw. nach rechts realisierbar ist.

## Patentansprüche

1. Transferpressenlinie zur Bearbeitung von großflächigen Blechteilen in mehreren Arbeitsstufen, bestehend aus mehreren im geringen Abstand zueinander aufgestellten einzelnen Pressen (1.1-1.3, 18.1-18.3, 27.1-27.3) denen jeweils nur eine Arbeitsstufe zugeordnet ist und die zumindest im Bereich der Pressentische (2.1-2.3) miteinander sowie mittels Verbindungswellen mit einem gemeinsamen Antrieb verbunden sind, mit ausfahrbaren Schiebetischen (12.1-12.3, 21.1-21.3, 22.1-22.3) für jede Arbeitsstufe und mit durch die gesamte Pressenlinie durchgehenden, mit Saugertraversen (24.1-24.3) oder Greiferelementen (16) verbundenen Tragschienen (15, 23) zum Zuführen und Entnehmen der Blechteile sowie zur schrittweisen Weitergabe derselben von einer Stufe zu nächsten,
**dadurch gekennzeichnet,**
daß die Pressengestelle der einzelnen Pressen (1.1-1.3) asymmetrisch mit in Teiletransportrichtung unterschiedlicher Ständerweite ausgeführt sind und die Pressen (1.1-1.3) in Teiletransportrichtung hintereinander so angeordnet sind, daß an jeder Seite der Transferpressenlinie eine große und eine kleine Ständerweite von Stufe zu Stufe wechseln und die der ersten und jeder übernächsten Presse (1.1, 1.3) zugeordneten Schiebetische (12.1, 12.3) nach der einen Seite und die der zweiten und jeder übernächsten Presse (1.2) zugeordneten Schiebetische (12.2) nach der gegenüberliegenden Seite quer zur Teiletransportrichtung zwischen den Pressenständern (4.1, 4.3, 5.2) mit der jeweils größeren Ständerweite aus- und einfahrbar sind.

2. Transferpressenlinie nach dem Oberbegriff des Anspruchs 1,
**dadurch gekennzeichnet,**
daß die Pressenständer (20.1-20.3) benachbarter Pressen (18.1-18.3, 27.1-27.3) quer zur Teiletransportrichtung hintereinander angeordnet und die Pressengestelle im Ständerbereich ineinander verschachtelt sind.

3. Transferpressenlinie nach den Ansprüchen 1 oder 2,
**dadurch gekennzeichnet,**
daß die Pressentische (2.1-2.3) benachbarter Pressen (1.1-1.3, 18.1-18.3, 27.1-27.3) in ihrem oberen und unteren Bereich auf Lücke distanziert sind und nur im Bereich der neutralen Faser mittels Paßfedern und Spannbolzen lagefixiert sind.

4. Transferpressenlinie nach den Ansprüchen 1 oder 2,
**dadurch gekennzeichnet,**
daß die Schiebetische (12.1-12.3) zwecks Werkzeugumsetzung im Havariefall einer Pressenstufe innerhalb der Pressenlinie in Teiletransportrichtung zur Folgestufe verfahrbar sind.

5. Transferpressenlinie nach den Ansprüchen 1 oder 2,
**dadurch gekennzeichnet,**
daß die Saugertraversen (24) in den Raststellungen zwischen den Werkzeugstufen im Ständerbereich der jeweils benachbarten Pressen (1.1-1.3, 18.1-18.3, 27.1-27.3) um ihre Längsachse in eine vertikale Warteposition schwenkbar auf den Tragschienen (23) gelagert sind.

6. Transferpressenlinie nach den Ansprüchen 1 oder 2,
**dadurch gekennzeichnet,**
daß die Saugertraversen (24) beim Werkzeugwechsel von den Tragschienen (23) abkoppelbar und auf der Oberseite der von den Stößeln (7.1-7.3) abgekoppelten und auf den Schiebetischen (12.1-12.3) abgelegten Oberwerkzeuge arretierbar und gemeinsam mit diesen aus dem Pressenraum ausfahrbar sind.

## Claims

1. Transfer press line for processing large-area sheet metal parts in a plurality of operating stages, comprising a plurality of individual presses (1.1 - 1.3, 18.1 - 18.3, 27.1 - 27.3) installed a slight distance apart from one another, with each of which only one operating stage is associated and which are connected at least in the region of the press beds (2.1 - 2.3) to one another and by connection shafts to a common drive, having extendable sliding tables (12.1 - 12.3, 21.1 - 21.3, 22.1 - 22.3) for each operating stage and having mounting rails (15, 23), which extend through the entire press line and are connected to suction crossheads (24.1 - 24.3) or gripping elements (16), for feeding and removing the sheet metal parts and for progressively passing on said sheet metal parts from one stage to the next,
**characterized in**
that the pressbodies of the individual presses (1.1 - 1.3) are constructed asymmetrically with the stand width varying in parts-conveying direction and the presses (1.1 - 1.3) are disposed successively in parts-conveying direction in such a way that at each side of the transfer press line a large and a small stand width alternate from stage to stage and, towards the one side, the sliding tables (12.1 - 12.3) associated with the first and every next but one press (1.1 - 1.3) and, towards the opposite side, the sliding tables (12.2) associated with the second press and every next but one press (1.2) are extendable and retractable at right angles to the parts-conveying direction between the press stands (4.1, 4.3, 5.2) having the, in each case, greater stand width.

2. Transfer press line according to the preamble of claim 1,
**characterized in**
that the press stands (20.1 - 20.3) of adjacent presses (18.1 - 18.3, 27.1 - 27.3) are disposed successively at right angles to the parts-conveying direction and the pressbodies are nested in one another in the stand region.

3. Transfer press line according to claims 1 or 2,
**characterized in**
that the press beds (2.1 - 2.3) of adjacent presses (1.1 - 1.3, 18.1 - 18.3, 27.1 - 27.3) in their upper and lower region are spaced so as to fill gaps and are fixed in position only in the region of the neutral axis by means of featherkeys and clamping bolts.

4. Transfer press line according to claims 1 or 2,
**characterized in**
that the sliding tables (12.1 - 12.3) for the purpose of tool replacement in the event of damage to a press stage within the press line are displaceable in parts-conveying direction to the next stage.

5. Transfer press line according to claims 1 or 2,
**characterized in**
that the suction crossheads (24) in the detent positions between the tool stages in the stand region of the, in each case, adjacent presses (1.1 - 1.3, 18.1 - 18.3, 27.1 - 27.3) are supported on the mounting rails (23) so as to be capable of swivelling about their longitudinal axis into a vertical stand-by position.

6. Transfer press line according to claims 1 or 2,
**characterized in**
that the suction crossheads (24) during a tool change may be decoupled from the mounting rails (23) and arrested at the top of the upper tools, which have been decoupled from the slides (7.1 - 7.3) and deposited on the sliding tables (12.1 - 12.3), and extended jointly with said upper tools out of the press area.

## Revendications

1. Ligne de presses transfert pour le travail de pièces de tôle de grande surface dans plusieurs postes de travail, composée de plusieurs presses élémentaires (1.1-1.3, 18.1-18.3, 27.1-27.3) implantées à un petit écartement mutuel, à chacune desquelles est associé un seul poste de travail, et qui sont reliées à un entraînement commun, au moins dans la région des tables (2.1-2.3) des presses, ainsi qu'au moyen d'arbres de liaison, ces presses possédant des tables coulissantes pouvant être extraites (12.1-12.3, 21.1-21.3, 22.1-22.3) pour chaque poste de travail et comportant des rails porteurs (15, 23) qui parcourent toute la ligne de presses et sont reliés à des rampes de ventouses (24.1-24.3) ou à des éléments de pinces (16) et qui servent à acheminer et à évacuer les pièces de tôle, ainsi qu'à les transférer pas-à-pas d'un poste au suivant,
caractérisée
en ce que les bâtis des presses distinctes (1.1-1.3) sont réalisés sous une forme asymétrique, avec des largeurs libres entre montants qui varient dans la direction du transport des pièces, et les presses (1.1-1.3) sont agencées les unes derrière les autres dans la direction du transport des pièces de manière que, sur chaque côté de la ligne de presses transfert, une grande largeur libre entre montants et une petite largeur libre entre montants alterne d'un poste à l'autre, et les tables coulissantes (12.1, 12.3) correspondant respectivement à la première presse et à la presse qui suit la suivante, peuvent être introduites et extraites transversalement à la direction du transport des pièces, entre les montants de presses (4.1, 4.3, 5.2) qui présentent la plus grande largeur libre entre montants sur un premier côté, tandis que les tables coulissantes (12.2) correspondant à la deuxième presse et à chaque presse qui suit la suivante (1.2) peuvent l'être vers le côté opposé.

2. Ligne de presses transfert selon le préambule de la revendication 1,
caractérisée
en ce que les montants (20.1-20.3) des presses adjacentes (18.1-18.3, 27.2-27.3) sont disposés l'un derrière l'autre dans la direction transversale à la direction du transport des pièces, et les bâtis de presses sont emboîtés les uns dans les autres dans la région des montants.

3. Ligne de presses transfert selon la revendication 1 ou 2,
caractérisée
en ce que les tables (2.1-2.3) des presses adjacentes (1.1-1.3, 18.1-18.3, 27.1-27.3) sont espacées en quinconce dans leur région supérieure et dans leur région inférieure et sont fixées en position, uniquement dans la région de la fibre neutre, au moyen de clavettes et de boulons de serrage.

4. Ligne de presses transfert selon la revendication 1 ou 2,
caractérisée
en ce que les tables coulissantes (12.1-12.3) peuvent être déplacées, pour le changement d'outils, dans le cas d'avarie d'un poste de presse, à l'intérieur de la ligne de presses dans la direction du transport, des pièces vers le poste suivant.

5. Ligne de presses transfert selon les revendications 1 ou 2,
caractérisée en ce que les rampes de ventouses (24) sont montées sur les rails porteurs (23), dans les positions d'arrêt entre les postes d'outillage dans la région des montants des presses adjacentes (1.1-1.3, 18.1-18.3, 27.1-27.3), de façon à pouvoir basculer autour de leur axe longitudinal pour prendre une position d'attente verticale..

6. Ligne de presses transfert selon la revendication 1 ou 2,
caractérisée
en ce que les rampes de ventouses (24) peuvent être découplées des rails porteurs (23) lors du changement d'outils et peuvent être verrouillées sur le côté supérieur des outils supérieurs découplés des poinçons (7.1-7.3) et déposées sur les tables coulissantes (12.1-12.3), et peuvent être évacuées de l'espace de la presse conjointement avec ces dernières.
